# EUROPEAN PATENT SPECIFICATION

(11) **EP 4 028 314 B1**
(45) Date of publication and mention of the grant of the patent: **26.02.2025**
(21) Application number: 20786595.7
(22) Date of filing: 11.09.2020
(51) Int. Cl.: B62K 5/01, B62K 5/027, B62K 5/08, B62K 5/10, B60G 17/005

(54) **TILTING MOTOR VEHICLE WITH TILT LOCK**
KIPPBARES KRAFTFAHRZEUG MIT KIPPVERRIEGELUNG
VÉHICULE À MOTEUR INCLINABLE DOTÉ D'UN VERROU D'INCLINAISON

(30) Priority: 13.09.2019 IT 201900016241
(43) Date of publication of application: 20.07.2022
(73) Proprietor: Piaggio & C. S.P.A., 56025 Pontedera Pisa (IT)
(72) Inventor: RAFFAELLI, Andrea, 56025 Pontedera (IT)
(74) Representative: Savi, Massimiliano
(86) International application number: PCT/IB2020/058450
(87) International publication number: WO 2021/048800

(56) References cited:
- EP-A1- 2 900 546
- EP-A1- 3 371 041
- EP-A2- 3 059 152
- EP-B1- 2 900 546
- WO-A1-2018/116211
- FR-A1- 2 995 869

## Description

The present invention falls within the scope of the manufacturing of a hybrid tilting motorcycle, where the term "hybrid" relates to a three-wheel or four-wheel motor vehicle (QUAD). In particular, the present invention relates to a tilting motor vehicle with tilt lock at the front axle and/or at the rear axle.

### BACKGROUND ART

The demand for hybrid motor vehicles is increasing, since these motor vehicles combine the peculiarities of motorcycles, in terms of practicality, with the stability of four-wheel vehicles. Hybrid motor vehicles, in particular, three-wheel ones, which are more common, are equipped with two steering and tilting wheels (i.e., which may tilt or be inclined) at the front and a fixed-axle drive wheel at the back. The rear wheel has the purpose of providing the machine torque and therefore of allowing the traction, while the front wheels, paired, have the purpose of providing the directionality of the vehicle. Less common are three-wheel vehicles with two wheels at the rear axle and a single wheel at the front axle.

In the solutions in which wheels are paired at the front axle, they may steer, as well as be inclined and tilt. By virtue of this solution, with respect to three-wheel motor vehicles with two wheels at the rear axle, the motor vehicles with two wheels at the front axle are equivalent to an actual motorbike since, just like a motorbike, the motor vehicle is capable of leaning into curves. With respect to a motor vehicle with only two wheels, such vehicles with two wheels paired at the front axle have, however, a greater stability ensured by the double support of the front wheels on the ground, similar to that provided by a car.

The front wheels are kinematically connected to each other by means of linkages which ensure them to tilt in a synchronous and specular manner, for example, by interposing articulated quadrilaterals. Such motor vehicles are further equipped with two independent suspensions, one for each of the two front wheels, provided with shock absorbers, also independent. Three-wheel tilting motor vehicles thus aim to provide the user with the practicality of a two-wheel motorcycle and, at the same time, the stability and safety of a four-wheel motor vehicle.

As it is known, some models of three-wheel motor vehicles are provided with tilt locking systems which may be operated by the user manually and/or by means of an automatic control system. It is the object of these tilt locking systems to prevent, under particular driving conditions, for example at low speeds or during parkings and stops, the vehicle from falling upon an uncontrolled or accidental tilting movement.

EP 2 900 546 A1 discloses the following features of claim 1, a three- or four-wheel tilting motor vehicle, comprising:at least one pair of wheels carried by a front or rear axle frame portion and kinematically connected to each other and to said frame portion by means of a tilting linkage which allows said wheels to tilt and optionally steer;a tilt locking system comprising:an interconnecting element which identifies a lateral axis and which comprises at least a first portion and a second portion which are opposed to each other;hinging means which connect said portions of said interconnecting element to two tilting parts of a front or rear axle, which are both subject to tilting movements of said wheels;connection means which connect said portions of said interconnecting element so that each portion is free to rotate with respect to the other about said lateral axis,drive means adapted to transform a tilting motion of said wheels into a rotating motion of said portions of said interconnecting element so that they rotate in opposite directions about said lateral axis in the presence of tilting movements of said wheels;- a blocking device adapted to block the rotation angle of said interconnecting element with respect to a tilting plane, wherein said blocking device takes a first active configuration for which said portions of said element become integral during the rotation about said lateral axis, thus preventing tilting movements of said wheels, and a second passive configuration for which said portions of said interconnecting element are free to rotate about said lateral extension axis,for each of said portions of said interconnecting element, said hinging means comprise a first connecting rod connected to said respective one of said tilting parts by means of a first kinematic pair of the first connecting rod, and to a respective one of said portions of said interconnecting element by means of a second kinematic pair of said first connecting rod.

Over the last few years, various tilting systems have been proposed, among which the one based on the use of an interconnecting element, mechanically detached from the vehicle frame, the purpose of which is to directly connect two parts of the wheels subjected to tilting movements. Conventionally, the interconnecting element connects the spindles of the two tilting wheels to each other, where the term *"spindle"* of a wheel means the mechanical part designed to support the rotation pivot of the wheel and to kinematically interconnect it to the suspensions, the steering device and, in the specific case of three-wheel motorcycles, the tilting linkage. The spindle may therefore be made in a single piece with the wheel pivot or it may be mechanically constrained to it to form a single piece. Alternatively, the spindle may pivotally support, by means of bearings, the wheel pivot, which is instead integral with the wheel itself.

Tilt locking systems based on the use of an interconnecting element provide for blocking all tilting movements by exclusively acting on such an interconnecting element, also including the movements generated by the asymmetrical springing of the two tilting wheels.

An example of these systems is described in patent application WO 2018/116211 in which the interconnecting element is a rod, the two ends of which are connected, by means of a ball joint, to a part of the vehicle subjected to tilting. The rod comprises a first portion and a second portion interconnected to each other along a longitudinal axis and configured to rotate, one independently of the other, about the same longitudinal axis. Each of the two portions is kinematically connected to the ball joint by means of mechanical gear drive means configured to transform the tilting movement, to which the ball joint is subjected, into a rotation of the respective rod portion about the longitudinal axis thereof. For each rod portion, a first gear is integral with the respective ball joint, to be affected by the tilting movements, while a second gear, meshing with the first one, is integral with the respective rod portion. In particular, the drive means are configured so that, following tilting movements, the first rod portion rotates in the opposite direction with respect to the second rod portion, about said longitudinal axis.

The system described in WO 2018/116211 comprises a tilt blocking device configured by a first head element, rotationally integral with said first portion, and a second head element, rotationally integral with the second rod portion. The second head element is movable along the longitudinal extension axis, between a first position and a second position, respectively, for the engagement with and disengagement from said first head element. In particular, when the two head elements are engaged, the two rod portions are mutually blocked in the rotation about the longitudinal axis. This results in a blocking of the drive means and therefore in a blocking of the tilting movements. On the contrary, when the head elements are disengaged, the two rod portions may rotate freely, with opposite directions of rotation, about the longitudinal axis, thus following the tilting movements.

The movement of the second head element between the two indicated positions (first and second) is determined by an actuator housed inside the rod. The two head elements are instead configured so that the engagement thereof occurs by means of a dog clutch, i.e., with rectangular teeth, which ensure a more stable engagement with respect to pointed teeth, even in the event that possible mismatches, generated by an imbalance in the constraints of the interconnecting element, tend to open the meshing. To this end, the two head elements are configured so that the second element engages in the first one by means of a rectilinear movement determined by the activation of the actuator.

The solution described above, although effective from the functional point of view, has some drawbacks, the first of which is identified in the high manufacturing costs, determined by the technical solutions adopted. In this regard, the use of gears, in particular bevel gears, to transform the tilting movements into the rotation of the two rod portions, and the use of a front clutch to engage the two head elements, are certainly disadvantageous solutions in terms of costs.

Another drawback is also noted in the operating principle of the blocking device used, i.e., in the claw clutch used to block the rotation of the two rod portions. In fact, when the actuator is activated so as to move the second head element longitudinally, the two head elements may not be aligned, i.e., the two set of teeth, defining the claw clutch, may be in an angular position not adapted to allow the toothed coupling. Therefore, in order to allow the engagement in any situation, suitable means must be provided inside the rod to align the two toothed elements. In some solutions, such means include an electric motor to *"phase"* the two toothed elements. In other solutions, a spring is included between the actuator and the toothed elements. Until the two toothed elements mesh, the spring is compressed, freeing itself only when the meshing of the two elements is obtained. In any case, the need to provide means which ensure the meshing of the toothed elements is a further critical factor in terms of rod complexity and therefore in terms of manufacturing costs.

Another drawback of the known solution discussed above is found in the complex internal structure of the rod inside which the actuator is positioned. In addition to defining the housing space for the actuator, the rod must be provided with suitable means which allow the sliding along the longitudinal axis of the second head element towards the first head element.

### SUMMARY

In view of the above considerations, it is the main task of the present invention to overcome, or at least contain, the drawbacks indicated above in relation to the background art, by providing a tilting motor vehicle equipped with a tilt locking system which allows combining the use of an interconnecting element with low manufacturing costs and high reliability. Within the scope of this task, it is a first object of the present invention to provide a tilting motor vehicle where the tilt locking system comprises a blocking device of simple manufacturing which allows for a simplified structure of the interconnecting element. It is a further task of the present invention to provide a tilting motor vehicle in which the tilt locking system is reliable and easy to manufacture at competitive costs. The present invention is based on the general consideration of overcoming the technical issue and of achieving the objects indicated above by varying, with respect to the background art, the configuration of the hinging means connecting each end of the interconnection rod to a respective part (of the front axle or of the rear axle) subjected to tilting, and by varying the configuration of the drive means which transform the tilting movements into corresponding rotations of the two parts of the interconnecting element. More precisely, the aforementioned task and objects are achieved by a front axle of a motorcycle comprising:
- at least one pair of wheels carried by a front or rear axle frame portion and kinematically connected to each other and to said frame portion by means of a tilting linkage through which they rotate in a synchronous and specular manner;
- a tilt locking system comprising:
   - an interconnecting element which identifies a lateral axis and which comprises at least a first portion and a second portion which are opposed to each other;
   - hinging means which connect said portions of said interconnecting element to two tilting parts of said front or rear axle, which are both subjected to tilting movements of said wheels;
   - connection means which connect said portions of said interconnecting element so that each portion is free to rotate with respect to the other about said lateral axis and so that each portion is free to translate with respect to the other along said lateral axis,
   - drive means adapted to transform a tilting motion of said wheels into a rotating motion of said portions of said interconnecting element so that they rotate in opposite directions about said lateral axis in the presence of tilting movements of said wheels;
   - a blocking device adapted to block the rotation angle of said interconnecting element with respect to a tilting plane, in which said blocking device takes a first active configuration for which said portions of said interconnecting element become rotationally integral about said lateral axis, thus preventing tilting movements of said wheels, and a second passive configuration for which said portions of said interconnecting element are free to rotate about said lateral extension axis.

The motor vehicle, and in particular the tilt locking system, is characterized in that, for each of said portions of the interconnecting element, the hinging means comprise a first connecting rod integral with a respective one of said tilting parts, in which said first connecting rod is connected to the respective one of said tilting parts by means of a first kinematic pair, and to a respective one of said portions of said interconnecting element by means of a second kinematic pair.

Furthermore, in accordance with the invention, for each of the portions of the interconnecting element, the drive means comprise a second connecting rod connected to a corresponding first connecting rod by means of a first kinematic pair so as to be integral during the tilting movement with the first connecting rod itself; said second connecting rod is connected to a respective portion of the interconnecting element by means of a second kinematic pair so as to cause a rotation of the corresponding portion of the interconnecting element about the lateral axis upon a tilting movement of said first connecting rod.

The tilt locking system is therefore based on the use of two pairs of connecting rods, each pair to connect the interconnecting element to a corresponding tilting part and to transform the tilting motion into a rotating motion of the respective rotating portion of the interconnecting element itself. The use of connecting rods is extremely advantageous, since it structurally simplifies the connection of the interconnecting element and at the same time leads to a reduction in costs and an increase in reliability.

According to a possible embodiment, the first kinematic pair, which connects the first connecting rod to the respective tilting part, configures a first rotation axis incident to the tilting plane and such that, in the absence of tilting, the first rotation axis is parallel to a midplane of the motor vehicle. Preferably, such a first kinematic pair is defined by a hinge comprising a cylindrical body which is integral with said respective tilting part in which a cylindrical portion of a rod-shaped body of said first connecting rod is inserted.

According to a possible embodiment, the second kinematic pair, which connects the first connecting rod to the respective portion of the interconnecting element, configures at least one second rotation axis coincident with the lateral axis of the interconnecting element and at least one third rotation axis orthogonal to the second rotation axis. Preferably, the second kinematic pair is defined by a pivot about which the respective portion of the interconnecting element is rotatable. Such a pivot configures the second rotation axis and comprises a bushing-shaped end which is hinged, by means of a pin, to a corresponding fork-shaped end of a rod-shaped body of said first connecting rod.

In accordance with an alternative embodiment, the second kinematic pair comprises a universal joint configured so that the axes of the piston pins coincide with said first rotation axis and with said third rotation axis.

In accordance with a possible embodiment, the first kinematic pair of said second connecting rod configures a first rotation axis which is orthogonal to said first rotation axis configured by said first kinematic pair of said first connecting rod. Preferably, said first kinematic pair of said second connecting rod is defined by a hinged joint comprising a cylindrical body integral with a second end of a respective first connecting rod so as to follow the latter in the tilting movements. Such a hinged joint comprises a first cylindrical end of the second connecting rod located inside the cylindrical body integral with the first connecting rod.

According to a possible embodiment, the second kinematic pair, which connects said second connecting rod to said respective portion of said interconnecting element, configures a second rotation axis and a third rotation axis. The second rotation axis is parallel to the second rotation axis configured by the second kinematic pair of the first connecting rod. The second rotation axis, referring to the second connecting rod, is parallel to the second rotation axis referring to the first connecting rod. Preferably, the second kinematic pair comprises a pivot pivotally inserted in a longitudinal seat defined on a respective one of said portions of the interconnecting element. Such a pivot defines the second rotation axis referring to the second kinematic pair and comprises a bushing-shaped end which is hinged, through a pin, to a corresponding fork-shaped end of a rod-shaped body of the second connecting rod.

In an alternative embodiment, the second kinematic pair referring to the second connecting rod comprises a mechanical joint interposed between a fork-shaped end of a rod-shaped body of the second connecting rod and a bracket integral with a respective portion of the interconnecting element. Such a bracket develops in an eccentric position with respect to the lateral axis so that the mechanical joint is placed in an eccentric position with respect to the lateral axis itself; such a mechanical joint configures the second rotation axis and the third rotation axis referring to the second kinematic pair.

In accordance with a possible embodiment, the blocking device is configured so as to generate a braking torque which blocks the rotation of the portions of the interconnecting element so that they become a single body.

In accordance with a preferred embodiment of the interconnecting element, the latter comprises a middle body, interposed between the two portions opposed to each other, which is rotationally integral, through first connection means, with one of said portions opposed to each other, connected to a respective tilting part through a respective first connecting rod and a respective second connecting rod; said middle body is also connected to the other of said portions through second connection means configured to allow the relative rotation of the middle body with respect to said other of said portions and simultaneously to make the middle body integral with said other of said portions in the relative translation movement with respect to said one of said portions.

In a possible embodiment, the blocking device comprises a jaw brake which is activated by means of an actuator supported, externally, by the middle body. Such a jaw brake is housed inside a cylindrical cavity of said other of said portions on the walls of which, following the activation of the actuator, the jaws of the brake itself act; such a brake being integral with the middle body in the rotation about the lateral axis thereof.

### LIST OF FIGURES

Further features and advantages of the invention will become more apparent from the discussion of the following detailed description of some preferred, but not exclusive embodiments of the motorcycle, disclosed by way of non-limiting example, with reference to the accompanying drawings, in which:
- Figures 1 to 4 show diagrammatic views, from different observation points, of a first possible embodiment of a front axle of a motor vehicle according to the present invention;
- Figures 5 and 6 are diagrammatic views, from different observation points, of a possible embodiment of a tilt locking system of a front axle according to the present invention;
- Figure 7 shows a view according to the section plane VII-VII in Figure 6;
- Figures 8 and 9 show diagrammatic views, from different observation points, of a further possible embodiment of a tilt locking system of a front axle according to the present invention;
- Figure 10 shows a view according to the section plane X-X in Figure 9;
- Figure 11 shows a view according to the section plane XI-XI in Figure 5;
- Figure 12 shows an exploded view of the tilt locking system in Figures 8 and 9;
- Figures 13 and 14 show views of further possible embodiments of a tilt locking system of a front axle according to the present invention;
- Figures 15, 16 and 17 show views of possible embodiments of a front axle according to the present invention;
- Figures 18 and 19 show views from the observation points of the tilt locking system shown in Figures 5 and 6 in a different configuration;
- Figure 20 shows a view according to the section plane XX-XX in Figure 19;
- Figures 21 and 22 show views from the observation points of the tilt locking system shown in Figures 5 and 6 in a further configuration;
- Figure 23 shows a view according to the section plane XXIII-XXIII in Figure 22; The same reference numerals and letters in the Figures identify the same elements or components.

### DETAILED DESCRIPTION

With reference to the aforementioned Figures, the present invention thus relates to a motor vehicle provided with a tilt locking system improved with respect to the background art. For the purposes of the present invention, the term *"motor vehicle"* must be considered in a broad sense, comprises any motorcycle having at least three wheels and in particular a pair of front or rear wheels subjected to tilting. Therefore, the so-called quadricycles with two wheels at the front axle and two wheels at the rear axle also fall within the definition of motorcycle. In the continuation of the description, as well as in the Figures, reference is made to a three-wheel motorcycle with two front wheels and one rear wheel. However, the following considerations remain valid, *mutatis mutandi,* also for three-wheel vehicles with one wheel at the front axle and two wheels at the rear axle, as well as for four-wheel vehicles (QUADs).

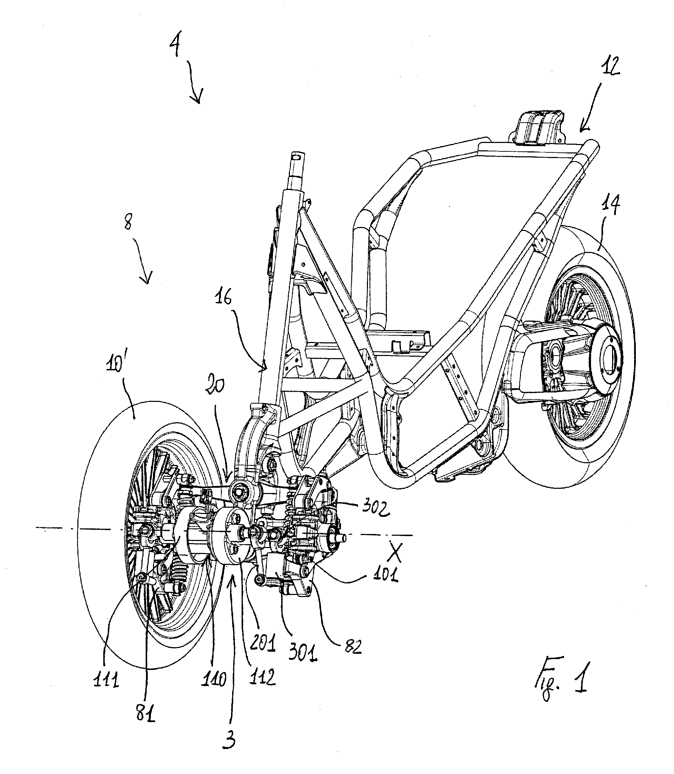

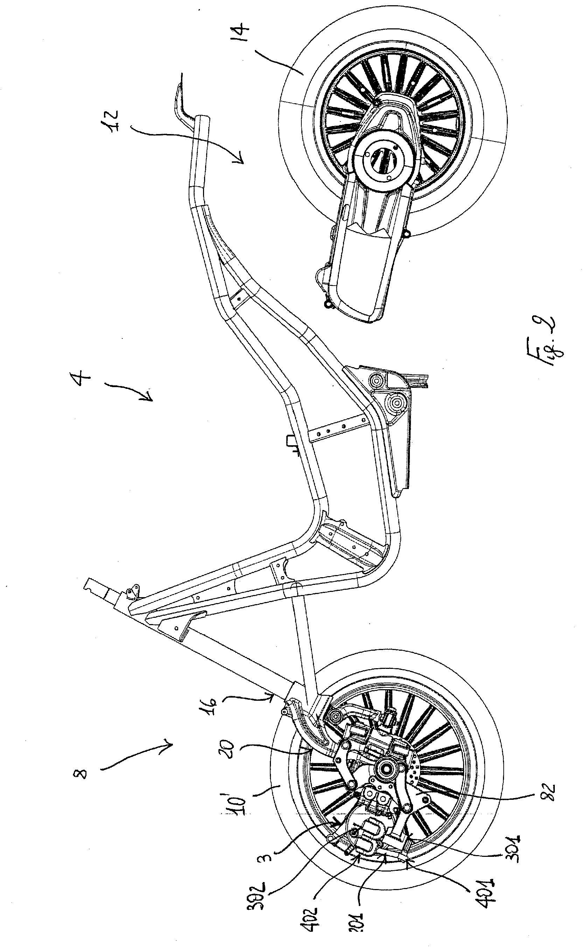

Figures 1 to 4 show a first possible embodiment of a motor vehicle 4 comprising a front axle according to the invention generally indicated by 8. The front axle 8 supports at least one pair of front wheels 10, while a rear axle 12 of the motor vehicle 4 supports at least one rear wheel 14. More precisely, the front axle 8 comprises a frame 16 which supports the two front wheels 10', 10" connected to each other and to the frame 16 itself by means of a tilting linkage 20. The latter allows the wheels 10 to tilt in a synchronous and specular manner. For the purposes of the present invention, the frame 16 of the motor vehicle 4 may take any shape (for example, of the trellis type, of the rock bouncer type, with a single or double cradle, etc.) and may be made in a single piece or in several parts.

The front axle 8 comprises a tilt locking system, generally indicated by reference numeral 3, which includes an interconnecting element 110 which identifies a lateral extension axis X (or lateral axis X). The element 110 comprises a first portion 111 and a second portion 112 opposite to each other. The two portions 111, 112 are connected so that each of them may rotate, in the opposite direction, with respect to the other one about the lateral axis X. The two portions 111, 112 are further connected to each other so as to allow each portion to mutually translate with respect to the other one along the lateral axis X.

The front axle 8 further comprises hinging means which connect each of the portions 111, 112 of the element 110 to a corresponding part 81, 82 of the front axle 8 subjected to the tilting movements of the front wheels 10. Therefore, by means of such means, the first portion 111 of said element 110 is connected to a first part 81 of the front axle 8 subjected to tilting and said second portion 112 of said element 110 is connected to a second part 82 of the front axle 8 subjected to tilting. These two parts of the front axle 8 will be referred to hereinafter also as tilting parts 81, 82.

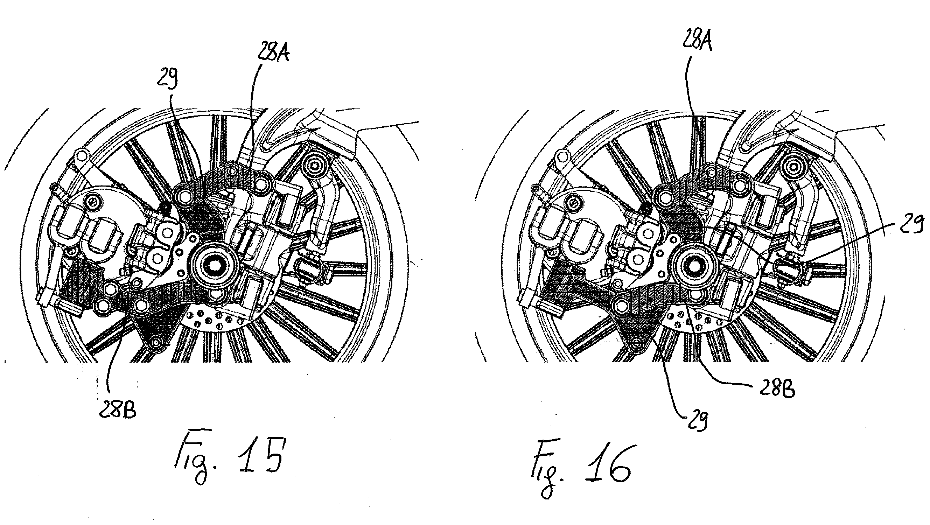

As better indicated below, depending on the configuration of the vehicle, the tilting parts 81, 82, to which the two rotating portions 111, 112 of the element 110 may be connected, may vary depending on the case and/or the configuration of the suspensions of the wheels 10'. Figures 15 and 16, commented below, show, for example, how for the same suspension it is possible to intervene on two different parts (spindle and crank) to create the connection with the respective rotating portion 111, 112.

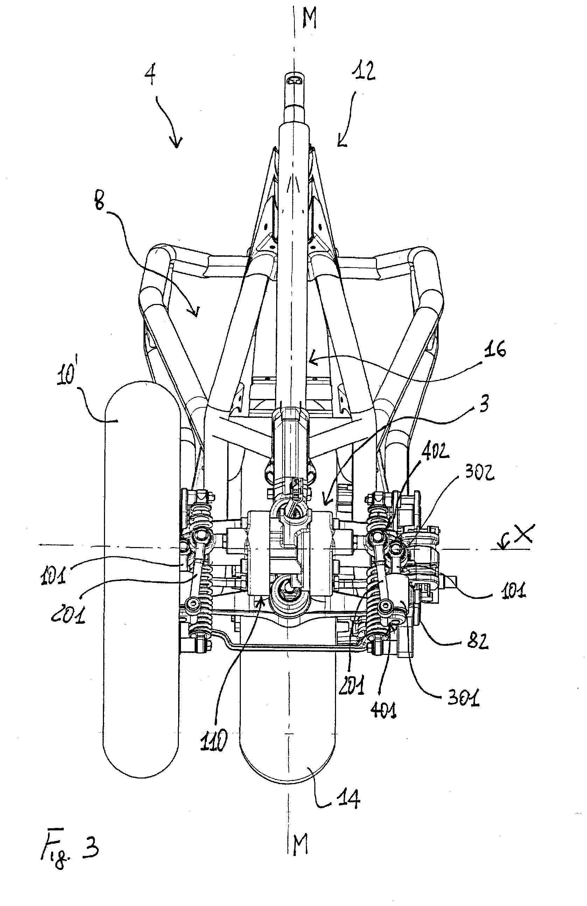

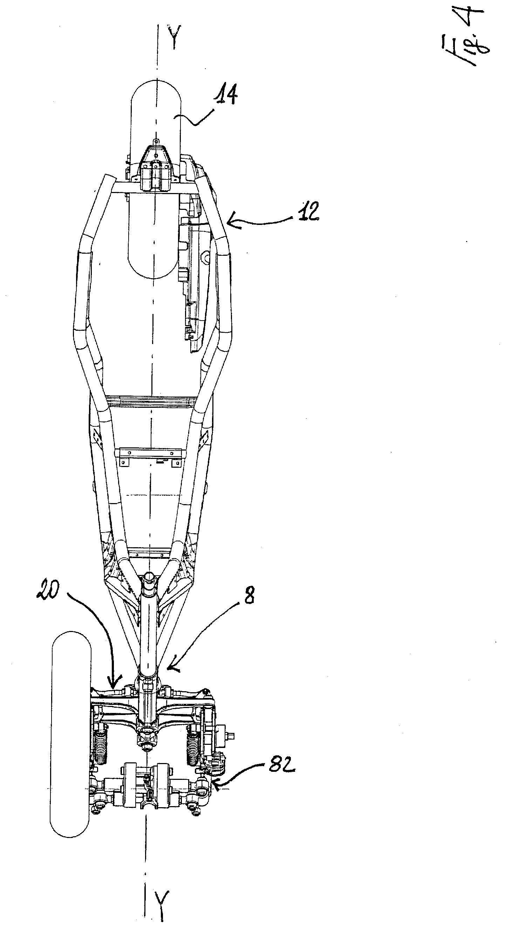

In fact, the tilt locking system 3 of the front axle 8 according to the invention does not depend on the possible configuration of the suspension or of the tilting linkage, but only requires that the two parts 81, 82 of the front axle 8 are precisely *"tilting",* i.e., subjected to the tilting movements to which the respective wheels 10, 10' are subjected. In this regard, for the purposes of the present invention, the expression *"tilting plane"* means a plane transversal to the longitudinal direction Y of the motor vehicle, therefore orthogonal to the midplane M-M of the vehicle (indicated in Figures 3 and 4). Exclusively for the purposes of the present invention, the inclination between the midplane M-M and a reference plane T-T is indicated by *"tilt angle",* which is always parallel to the plane of the wheels 10, also during the tilting. Therefore, when the two wheels 10 are parallel and vertical, as in Figure 1 (no tilt), the plane M-M coincides with the reference plane T-T.

The tilt locking system 3 comprises drive means configured to transform the tilting motion of the front wheels 10 into a rotating motion of the two portions 111, 112 of the element 8, i.e., so that the same portions rotate opposed to each other about the lateral extension axis X when tilting movements occur. As already indicated above, the element 8 is in any case configured to allow mutual axial movements of the two portions 111, 112 so as to follow the steering movement of the front wheels, i.e., on a steering plane orthogonal to the midplane M-M and to the tilting plane.

The tilt locking system comprises a blocking device (500-550) adapted to block the rotation angle of the interconnecting element 110 with respect to a tilting plane. Such a blocking device takes a first active configuration for which the portions of the element 110 become rotationally integral about the lateral axis. This condition prevents the tilting movements of the wheels 10. The device is configured to also take a second, passive configuration, for which the portions of the interconnecting element 110 are free to rotate about the lateral axis, so as to accommodate, while driving, the tilting movements of the motorcycle.

According to the present invention, for each of the two rotating portions 111, 112 of the element 110, the hinging means comprise a respective connecting rod 101 (hereinafter referred to as the first connecting rod 101) integral with a respective one of the tilting parts 81, 82 of the front axle 8. In particular, the first connecting rod 101 comprises a rod-shaped body 300 and a first kinematic pair 301 which connects said rod-shaped body 300 to the respective tilting part 81, 82 by means of a first kinematic pair 301 and to the respective rotating portion 111, 112 of the element 110 by means of a second kinematic pair 302.

The first kinematic pair 301 is a hinged joint, so as to follow the tilting movements of the corresponding tilting part 81, 82. The *"hinge"* makes the first connecting rod 101 translationally integral with the respective tilting part 81, 82, while configuring a rotation axis which allows the first connecting rod 101 to rotate with respect to the tilting part 81, 82. The second kinematic pair 302 is preferably cylindrical, but it may also be spherical.

Again in accordance with the present invention, for each of the two rotating portions 111, 112 of the element 110, the drive means (having the purpose of rotating the portions 111, 112 when the tilt occurs) comprise another connecting rod 201 (hereinafter referred to as the second connecting rod 201). This comprises a rod-shaped body 400 connected, by means of a first kinematic pair 401, to a respective first connecting rod 101 of the hinging means. In particular, the first kinematic pair 401 is configured so that the second connecting rod 201 is affected by the tilting movements to which the respective first connecting rod 101 is subjected.

The second connecting rod 201 further comprises a second kinematic pair 402 which connects it to a respective portion 111, 112 of the element 110 so that, following the tilting movement to which the respective first connecting rod 101 is subjected, the movement of the second connecting rod 201 causes the rotation of the respective portion 111, 112 of said element 110 about the lateral axis X.

For the purposes of the present invention, the expression *"connecting rod"* generally indicates any member or body shaped like a rod (having any straight or curved shape) with two kinematic pairs at the ends thereof, which allow it to be connected respectively to a first body and to a second body so that, by means of this connection, the movement of one of the two bodies causes the movement of the other body.

In accordance with a preferred embodiment of the invention shown in the Figures, for each of the rotating portions 111, 112, the first kinematic pair 301 which connects the first connecting rod 101 to the respective tilting part 81, 82 configures a first rotation axis 3010 which is incident to the tilting plane and parallel to the reference plane T-T defined above. Under the condition shown in Figures 1 to 4, in which the wheels are vertical and therefore there is no tilt, the first rotation axis 3010 is therefore parallel to the midplane M-M.

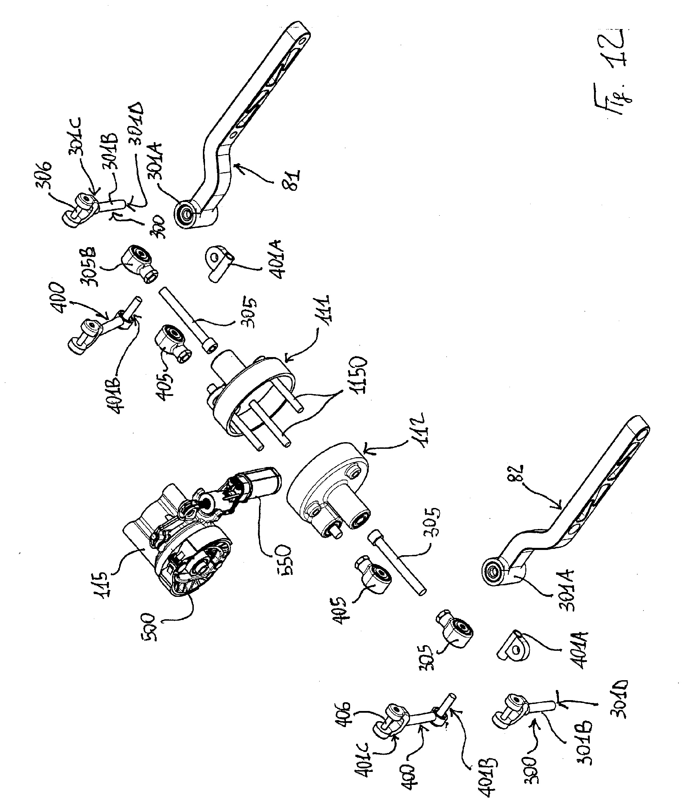

In the embodiment shown in the Figures (in particular seen in the exploded view in Figure 12), the first kinematic pair 301 is defined by a hinge comprising a cylindrical body 301A, integral with the respective tilting part 81, 82, in which a cylindrical portion 301B of the rod-shaped body 300 of the first connecting rod 101 is inserted.

The second kinematic pair 302 which connects the first connecting rod 101 to the respective portion 111, 112 of the element 110 configures instead at least one second rotation axis 3022 coinciding with the lateral axis X of the element 110 and at least one third rotation axis 3023 orthogonal to said second rotation axis 3022. In substance, the second kinematic pair 302, on the one hand, allows the rotation of the respective portion 111, 112 of the element 110 about the lateral axis X. At the same time, the second kinematic pair 302, by configuring the third rotation axis 3023, allows a roto-translation of the element 110 itself, substantially parallel to the tilting plane.

In the embodiment shown in the Figures (in particular, seen in the exploded view in Figure 12), the second kinematic pair 302 is defined by a pivot 305 about which the corresponding portion 111, 112 of the element 110 is rotatable. The pivot 305 configures the second rotation axis 3022. A first bushing-shaped end 305B thereof is hinged, through a pivot 306, to a corresponding fork-shaped end 301C of the rod-shaped body 300 of the first connecting rod 101. This hinge connection configures the third rotation axis 3023 indicated above. The pivot 305 is precisely coaxial with respect to the respective portion 111, 112 of the element 110, so that the second rotation axis 3022 coincides with the lateral axis X.

Also in this case, the second kinematic pair 302 may take a different configuration. In a possible embodiment, the second kinematic pair may comprise a universal joint (arranged at 90°) configured so that the axes of the piston pins coincide with the first rotation axis 3010 and with the third rotation axis 3023. Alternatively, a ball joint may be used, since the additional degree of freedom of the ball (3 rotations instead of the two given by the universal joint) would avoid the adoption of the pivot 305 (and relative bearings between the pivot 305 and the respective rotating portion 111, 112 ). However, the use of a ball joint, even if kinematically possible, appears to be a solution constructively more difficult with respect to using a universal joint and to the preferred solution shown in the Figures.

According to a possible embodiment shown in the Figures, for each of the portions 111, 112 of the element 110, the first kinematic pair 401 of the second connecting rod 201 configures a first rotation axis 4010 which is orthogonal to the first rotation axis 3010 configured by the first kinematic pair 301 of the first connecting rod 101.

As shown in the Figures (in particular, seen in the exploded view in Figure 12), the first kinematic pair 401 may be defined by a hinged joint (401A-301D) comprising a cylindrical body 401A integral with a second end 301D of the respective first connecting rod 101, so as to follow the latter in the tilting movements. The hinged joint is completed by a first cylindrical end 401B of the second connecting rod 201 located inside said cylindrical body 401A integral with the first connecting rod 101.

According to a possible embodiment, for each of the portions 111, 112 of the element 110, the second kinematic pair 402 which connects the second connecting rod 201 to the respective portion 111, 112 of the element 110 configures a second rotation axis 4022 and a third rotation axis 4023, in which said second rotation axis 4022 is parallel to the second rotation axis 3022 configured by the second kinematic pair 302 of the first connecting rod 101. In particular, such a second rotation axis 4020 referring to the second connecting rod 201 is parallel but spaced apart with respect to the second rotation axis 3022 referring to the first connecting rod 101. The third rotation axis 4023 referring to the second connecting rod 201 is instead orthogonal with respect to the second rotation axis 4022 referring to the second connecting rod 201 itself.

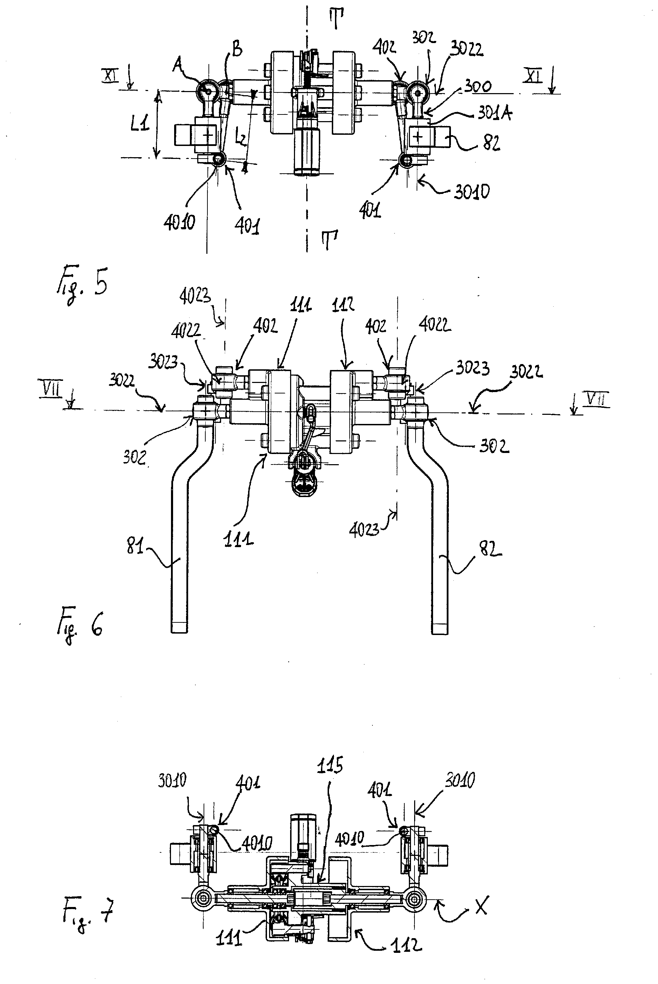

As it may be seen in Figure 6 or from the exploded view in Figure 12, the second kinematic pair 402 referring to the second connecting rod 201 may be made in a similar manner to the second kinematic pair 301 referring to the first connecting rod 101. In particular, a pivot 405 is preferably provided, pivotally inserted into a longitudinal seat defined on the respective rotating portion 111, 112 of the element 110. The pivot 405 defines the second rotation axis 4022 referring to the second connecting rod 201. The pivot 405 comprises a bushing-shaped end 405B which is hinged, through a pivot 406, to a corresponding fork-shaped end 401C of the rod-shaped body 400 of the second connecting rod 201.

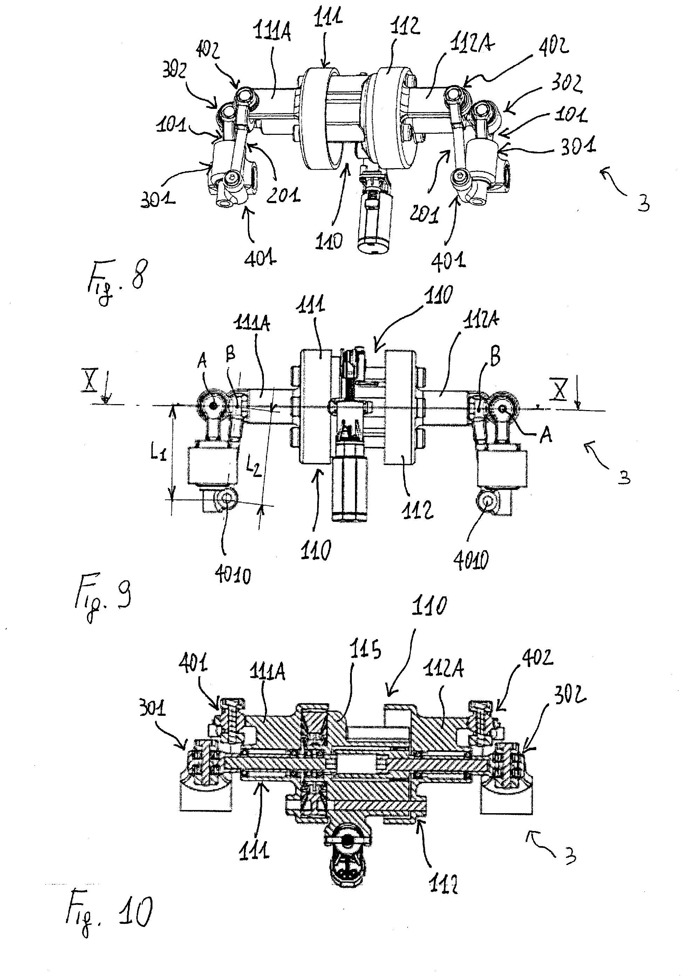

Figures 8 to 10 show an alternative embodiment of the locking system 3 which differs from that shown in Figures 5 to 7 for a different configuration of the second kinematic pair 402 referring to the second connecting rod 201. In particular, in this case, the rod-shaped body 400 of the second connecting rod 201 is connected to the corresponding portion 111, 112 of the element 110 through a mechanical joint of the type commercially known as Uniball^{®}. With reference in particular to the sectional view in Figure 10, the joint is interposed between a fork-shaped end of the rod-shaped body 400 of the second connecting rod 201 and a bracket 111A, 112A integral with the respective portion 111, 112 of the element 110. In particular, the bracket 111A, 112A develops in a position eccentric with respect to the lateral axis X, i.e., so that the mechanical joint is placed in an eccentric position with respect to the lateral axis X itself. The mechanical joint however configures the two mutual rotation axes 4022, 4023, orthogonal with respect to each other, which allow the second connecting rod 201 to oscillate with respect to the respective portion 111, 112 of the element 110 during the movement thereof.

In accordance with a preferred embodiment, shown in the Figures, for each of the portions 111, 112 of the element 110, the length of the second connecting rod 201 is greater than the length of the respective first connecting rod 101. The expression *"length of the first connecting rod* 101"means the minimum distance L1 between the intersecting point (indicated by A in Figures 5 and 9) of the three axes 3010, 3022, 3023, configured by the two kinematic pairs 301, 302 of the first connecting rod 101,102 itself, and the first rotation axis 4010 defined by the first kinematic pair 401 of the second connecting rod 201. The expression *"minimum distance"* means the distance between point A and the projection on the first rotation axis 3010, referring to the first connecting rod 201, of the first rotation axis 4010 referring to the second connecting rod 201.

Instead, the expression *"length of the second connecting rod 201"* means the distance L2 between the intersecting point (indicated by B in Figures 5 and 9) of the second rotation axis 4020 and the third rotation axis 4030, configured by the second kinematic pair 402 of the second connecting rod 201, and the first rotation axis 4010 defined by the first kinematic pair 401 referring to the second connecting rod 201 itself. In the case of the embodiment shown in Figure 9, the intersecting point B substantially coincides with the center of the mechanical joint.

The different length of the two connecting rods 101, 201, combined with the eccentric position in which the second rotation axis 4020 is located (configured by a fork-connection or by the mechanical joint) with respect to the lateral axis X (i.e., with respect to the first rotation axis 3010 configured by the second kinematic pair 302 of the first connecting rod 1901) determine the rotation of the respective portions 111, 112 of the element 110 following the tilting movement. In accordance with a preferred embodiment shown in the Figures, the blocking device of the tilt locking system 3 is configured so as to generate a braking torque which blocks the rotation of the two portions 111, 112 so that they become a single body.

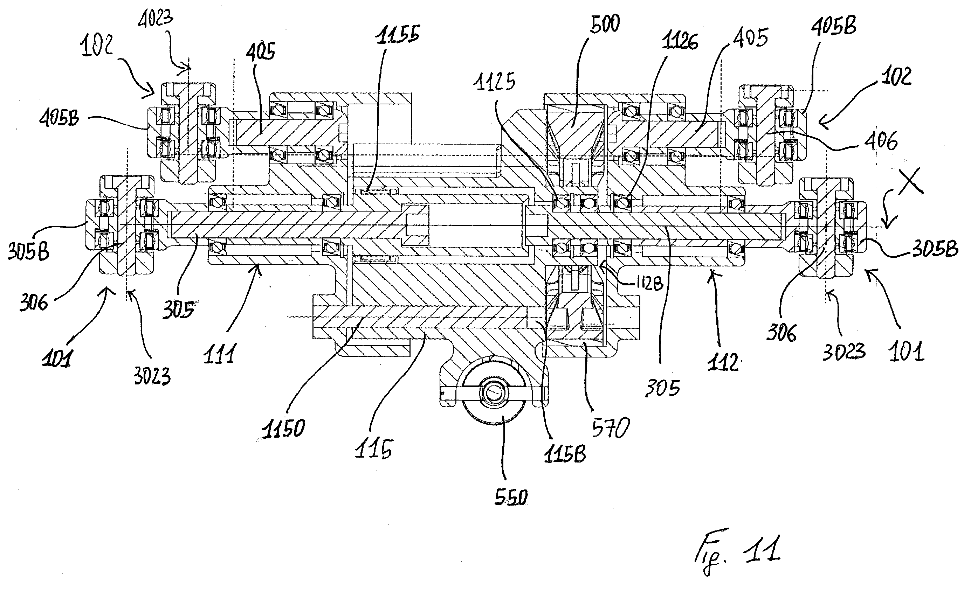

In this regard, Figures 11 and 12 allow observing a possible embodiment of the element 110, and therefore also of the blocking device associated therewith. In particular, in this embodiment, the two rotating portions 111, 112 of the element 110 advantageously have the same configuration. A middle body 115 is arranged between the two rotating portions 111, 112. The latter is rotationally integral, through first connection means, to a first portion 111 connected to a respective tilting part 81, through a pair of levers (first connecting rod 101 and second connecting rod 201) in accordance with the objects set out above. The central body 115 is also connected to the second portion 112 of the element 8 by means of second connection means. The latter are instead configured to allow the relative rotation of the central body 115 with respect to the second portion 112 and, at the same time, to make the middle body 115 integral with the second rotating portion 112 in the relative translation movement (along the lateral axis X) with respect to the first rotating portion 111.

Therefore, due to the effect of the first connecting means, the middle body 115 rotates together with the first rotating portion 111, but during the steering step, for example, it remains free to move together with the second rotating portion 112, with respect to the first rotating portion 111 itself.

Again with reference to Figures 11 and 12, between the middle body 115 and the second portion 112, a jaw brake 500 is arranged, which is activated by means of an actuator 550 externally supported by the central body 115 (the actuator 550 is not shown in the Figures 1 to 4). In particular, the brake 500 is housed inside a cylindrical cavity 112B of the second portion 112 on the walls of which, following the activation of the actuator 500, the jaws of the brake itself act. The brake 500 is, in any case, integral with the middle body 115, i.e., it rotates with it together with the first portion 111.

By means of the second connection means, the brake 500 always maintains the same position along the lateral axis X with respect to the cylindrical cavity 112B so as to always maintain the same axial position with respect to the cylindrical cavity. Thereby, the braking torque may be activated at any time. On the contrary, during the driving of the motor vehicle 4, the middle body 115 is free to rotate about the lateral axis X, due to the effect of the connection with the first portion 111. The middle body 115 also rotates the brake 500 and the actuator 550 thereof, which do not change the mutual position thereof.

In accordance with a possible embodiment shown in Figures 11 and 12, the first connection means comprise three pins 1150 integral with the first rotating portion 111 and preferably arranged at 120 degrees about the longitudinal axis. The three pins 1150 slide in corresponding longitudinal cavities 115B defined along the central body 115 and with an axis parallel to the lateral axis X. The first connection means also comprise supports 1155, preferably in the form of a bushing or of tilter bearings, which allow the coaxial rotation of the first portion 111 with the central body 115. Such supports 1155 are configured so as to allow the same axial sliding allowed for the pins 1150 in the corresponding cavities. In this regard, the use of an antifriction bushing appears particularly advantageous for this purpose.

With reference to Figure 11, in accordance with a possible embodiment, the second connection means comprise supports 1125, 1126 (for example, ball bearings) interposed between the middle body 115 and the second portion 112, so as to make the two parts (115-112) independent during the rotation about the lateral axis X. In particular, first supports 1125 of the middle body 115 are arranged between the pivot 305 of the second kinematic pair 302 of the first connecting rod 101 and the brake 500. Second supports 1126 are instead arranged between the pivot 305 itself and the second portion 112 of the element 110. The central pivot 305 remains axially constrained to the second portion 112, blocking the axial position of the brake 500 with respect to the second portion 112 itself. Therefore, the central pivot 305 is, by all means, part of the second connecting means indicated above.

The sectional view in Figure 11 allows appreciating how the lateral rotation axis X of the two portions 111, 112 of the element 110 is defined by the alignment of the pivots 305, each relative to a second kinematic pair 302 of the respective first connecting rod 101.

Again with reference to Figure 11, it may be seen that according to a preferred embodiment, with reference to the second connecting rod 201, the bushing 305B of the second kinematic pair 302, defining the third rotation axis 3023, is screwed at the end of the pivot 305, defining the second rotation axis 3022. Thereby, the axial position of the pivot 305, and therefore of the brake 500, with respect to the second portion 112, is established.

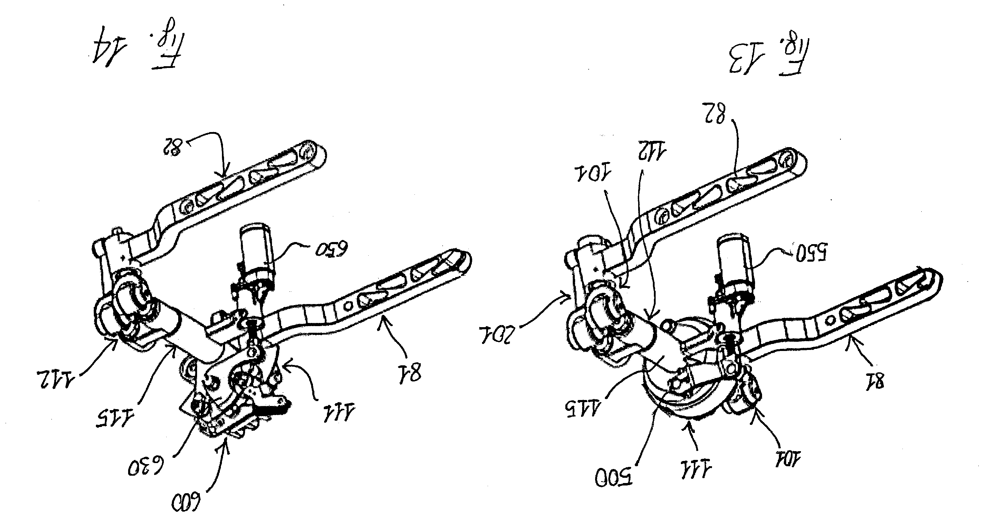

The structure of the interconnecting element 110 just described is only a possible one, and therefore not an exclusive embodiment thereof. In this regard, Figures 13 and 14 show other possible embodiments of the interconnecting element 110 as well as of the blocking device 500-550. With reference, for example, to Figure 13, the two portions 111, 112 of the element 110 and the middle body 115 may be shaped differently while maintaining a drum brake operated by an actuator as a blocking device. In Figures 13 and 14, the two rotating portions 111, 112 take a different configuration from the one described above in the comment to Figures 11 and 12. In any case, the configuration thereof is such as to allow the connection of each of them to the respective pair of connecting rods 101, 201, in accordance with the principles of the present invention.

In the embodiment shown in Figure 14, the two rotating portions 111, 112 and the middle body 115 substantially have the same configuration seen in Figure 13. On the contrary, the blocking device comprises a discoidal element 600 integral with one of the two rotating portions (the first portion 111) and braking calipers 630 acting on such a discoidal element 600 to develop a braking torque which blocks the rotation of the two portions 111, 112. The braking calipers are always activated by means of an actuator 650, always supported by the middle body 115.

It is also noted that in a further possible embodiment, the interconnecting element 110 may take the configuration described in the document WO 2018/116211. In other words, the use of a pair of connecting rods 101, 201 to connect each rotating portion 111, 112 to the corresponding tilting part 81, 82 is independent of the configuration of the blocking device and of the internal structure of the element 8.

Similarly, it should also be reiterated that the use of the first connecting rods 101, 102 is independent of the parts 81, 82 of the front axle 8 to which they are actually connected, provided that such parts are indeed tilting. In this regard, Figures 15 and 16 show, for the same configuration of the front axle 8, two different tilting parts to which the respective connecting rod may be connected. In particular, in both Figures, the component hatched with horizontal lines is the spindle 29 of the wheel (according to the definition indicated above), while the components hatched with vertical lines are two cranks 28A-28B which, together with the spindle 29, make up a quadrilateral suspension according to a technical solution known *per* se from the background art. In the possible embodiment shown in Figure 15, the lower crank 28B has a portion which configures the cylindrical body 301A into which the cylindrical portion 301B of the first connecting rod 101 is inserted, so as to configure the first kinematic pair 301 described above. Instead, in the embodiment shown in Figure 16 the cylindrical body 301A is defined by a portion 29B of the spindle 29, while the two cranks 28A, 28B have a simplified shape. In both cases, the first connecting rod 101 is in any case connected to a tilting part 81. From the two Figures 15 and 16 in question, it may therefore be noticed that, depending on the case, it is possible to vary the conformation of the spindle 29 or that of the crank 28A-28B to connect the first connecting rod 101 or to define the first kinematic pair 301 thereof. All this, without modifying the suspension layout.

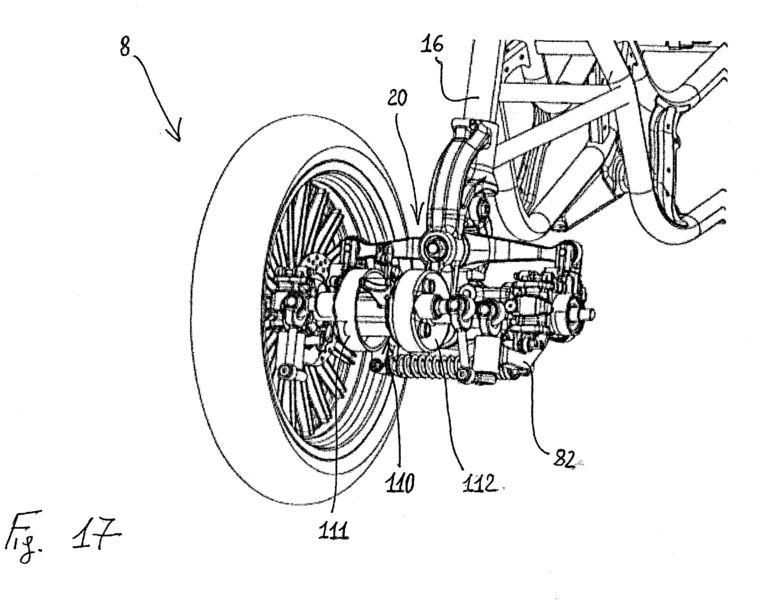

The use of the first connecting rods 101, 102 is also independent of the tilting linkage 20 which connects the front wheels 10', following the tilting movements thereof. In this regard, Figure 17 shows a possible embodiment of a front axle according to the present invention in which the tilting linkage 20 has a configuration with double transverse rockers, known *per se.* For those skilled in the art, such a configuration appears apparently different from that, equally known, shown in Figures 1 to 4 in which the tilting linkage 20 comprises a pair of articulated arms.

With reference to Figures 5 to 7 and 18 to 23, the operating principle of the tilt locking system according to the invention is described below. Such a system corresponds to the one shown in the front axle 8 in Figures 1 to 4. However, the following considerations are to be considered valid also in the case where one or more components of the tilt locking system 3 have different embodiments, for example, those shown in the other accompanying Figures.

Figures 5 to 7 refer to the locking system in a first position corresponding to a condition in which the front wheels 10' are vertical, i.e. in the absence of tilting. Figure 5 shows the reference plane T-T which is typical of the tilt. Figures 5 and 6 show the position, taken under this condition, of the kinematic pairs 302, 402 which, for each side of the interconnecting element 110, connect the two connecting rods 101, 201 to the corresponding rotating portion 111, 112. In particular, Figure 5 shows the greater length of the second connecting rod 201 with respect to the first connecting rod 101, while Figure 6 shows the eccentric position, with respect to the lateral axis X, occupied by the second rotation axis 4022 configured by the second kinematic pair 402 of the second connecting rod 201.

The sectional view in Figure 7 allows observing how, under this condition, for the first connecting rod 101, the first rotation axis 3010 configured by the first connecting rod 101 is substantially orthogonal to the lateral axis X, this condition being typical of the absence of tilting.

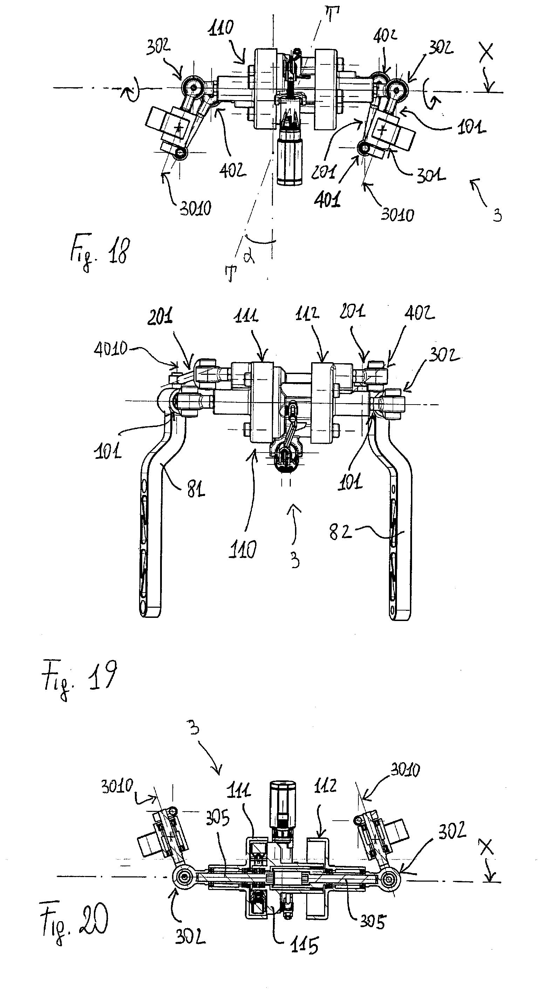

Figures 18 to 20, instead, relate to a second configuration taken by the tilt locking system 3 following a tilting movement in a clockwise direction, i.e., following a tilt to the right of the tilting parts starting from the condition shown in Figures 5 to 7. The tilt is identified by the angle α between the position taken by the plane T-T with respect to the starting position referred to in Figures 5 to 7. The tilting movement determines an inclination of the first rotation axis 3010 of the first connecting rod 101 with respect to the lateral axis X, as shown in Figure 20. Since it is integral during the tilting movement with the first connecting rod 101, the second connecting rod 201 also tilts, causing the rotation of the respective rotating portion 111, 112 of the interconnecting element 110. In this regard, Figure 18 allows observing how the two portions 111, 112 rotate in the opposite direction (the one on the right counterclockwise and the one on the left clockwise) about the lateral axis X. The rotation of each portion 111, 112 is determined by the different length of the two connecting rods 101, 201 and by the eccentric position of the connection between the second connecting rod 201 with the respective rotating portion 111, 112.

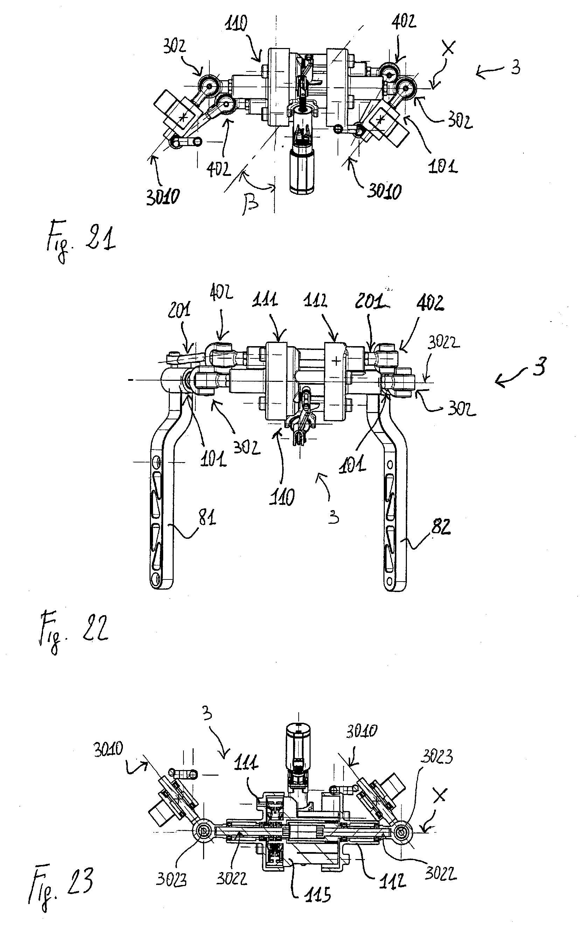

Figures 21 to 23 show a third configuration taken by the tilt locking system 3 following a tilting movement characterized by an angle β greater than the angle α which is typical of the condition in Figures 18 to 20. From the comparison of Figures 18 and 21, as well as from the comparison of Figures 19 and 22, it may be seen that, as the angle of inclination of the first connecting rods 101 increases, the rotation angle of the two rotating portions 111, 112 consequently increases (in opposite directions) due to the effect of the greater rotation of the second connecting rods 201 driven by the tilting motion to which the first connecting rods 101 are subjected. From the comparison of Figures 7, 20 and 23, it is possible to observe how the tilting movement causes a rotation of the middle body 115 of the interconnecting element 110. In accordance with the principles set out above, the middle body 115 is in fact rotationally driven by the first portion 111 to which it is integral by means of the first connection means mentioned above. At the same time, the middle body 115 does not change the axial position thereof with respect to the second portion 112 to which it remains integral during the relative movement along the axis.

The technical solutions described above allow fulfilling the set tasks and objects. In particular, the use of a connecting rod to transform the tilting motion into the rotation of the two portions of the interconnecting element is a highly advantageous solution, especially in terms of costs, while still ensuring a high degree of reliability. Furthermore, the configuration of the tilt locking system according to the invention advantageously allows blocking only the tilt angle of the vehicle, leaving the pitch free. In fact, the tilt locking system does not block the suspension of the vehicle itself, but merely imposes that the spring stroke of the two wheels is the same. This allows, for example, that, in the event of braking, the vehicle may *"sink"* the pitch without tilting when the tilt lock is activated.

From the comparison of Figures 7, 20 and 23, it is possible to observe how the tilting movement causes a rotation of the middle body 115 of the interconnecting element 110. In accordance with the principles set out above, the middle body 115 is in fact rotationally driven by the first portion 111 to which it is integral by means of the first connection means mentioned above. At the same time, the middle body 115 does not change the axial position thereof with respect to the second portion 112 to which it remains integral during the relative movement along the axis.

The technical solutions described above allow fulfilling the set tasks and objects. In particular, the use of a connecting rod to transform the tilting motion into the rotation of the two portions of the interconnecting element is a highly advantageous solution, especially in terms of costs, while still ensuring a high degree of reliability. Furthermore, the configuration of the tilt locking system according to the invention advantageously allows blocking only the tilt angle of the vehicle, leaving the pitch free. In fact, the tilt locking system does not block the suspension of the vehicle itself, but merely imposes that the spring stroke of the two wheels is the same. This allows, for example, that, in the event of braking, the vehicle may *"sink"* the pitch without tilting when the tilt lock is activated.

## Claims

1. A three- or four-wheel tilting motor vehicle, comprising:
- at least one pair of wheels (10) carried by a front or rear axle frame portion (16) and kinematically connected to each other and to said frame portion (16) by means of a tilting linkage (20) which allows said wheels (10) to tilt and optionally steer;
- a tilt locking system (3) comprising:
- an interconnecting element (110) which identifies a lateral axis (X) and which comprises at least a first portion (111) and a second portion (112) which are opposed to each other;
- hinging means which connect said portions (111, 112) of said interconnecting element (110) to two tilting parts (81, 82) of a front or rear axle, which are both subject to tilting movements of said wheels (10);
- connection means which connect said portions (111, 112) of said interconnecting element (110) so that each portion (111, 112) is free to rotate with respect to the other about said lateral axis (X) and so that each portion (111, 112) is free to translate with respect to the other along said lateral axis (X),
- drive means adapted to transform a tilting motion of said wheels (10) into a rotating motion of said portions (111, 112) of said interconnecting element (110) so that they rotate in opposite directions about said lateral axis (X) in the presence of tilting movements of said wheels (10);
- a blocking device adapted to block the rotation angle of said interconnecting element (110) with respect to a tilting plane, wherein said blocking device takes a first active configuration for which said portions (111, 112) of said element (110) become integral during the rotation about said lateral axis (X), thus preventing tilting movements of said wheels (10), and a second passive configuration for which said portions (111, 112) of said interconnecting element (110) are free to rotate about said lateral extension axis (X),
wherein, for each of said portions (111, 112) of said interconnecting element (110), said hinging means comprise a first connecting rod (101) connected to said respective one of said tilting parts (81, 82) by means of a first kinematic pair (301) of the first connecting rod (101), and to a respective one of said portions (111, 112) of said interconnecting element (110) by means of a second kinematic pair (302) of said first connecting rod (101),
and wherein, for each of said portions (111, 112) of said interconnecting element (110), said drive means comprise a second connecting rod (201) connected to a corresponding said first connecting rod (101) by means of a first kinematic pair (401) of the second connecting rod (201) so as to be integral during the tilting movement with said first connecting rod (101), said second connecting rod (201) being connected to a respective portion (111, 112) of said interconnecting element (110) by means of a second kinematic pair (402) of the second connecting rod (201) so as to cause a rotation of said corresponding portion (111, 112) of said interconnecting element (110) about said lateral axis (X) upon a tilting movement of said first connecting rod (101).

2. The three- or four-wheel tilting motor vehicle (4) according to claim 1, wherein said first kinematic pair (301) of the first connecting rod (101) which connects said first connecting rod (101) to said respective tilting part (81, 82) configures a first rotation axis (3010) which is incident on said tilting plane and such that said first rotation axis (3010) is parallel to a midplane (M-M) of said motor vehicle (4) in the absence of tilting.

3. The three- or four-wheel tilting motor vehicle (4) according to claim 2, wherein said first kinematic pair (301) of the first connecting rod (101) is defined by a hinge comprising a cylindrical body (301A) which is integral with said respective tilting part (81, 82) in which a cylindrical portion (301B) of a rod-shaped body (300) of said first connecting rod (101) is inserted.

4. The three- or four-wheel tilting motor vehicle (4) according to any one of claims 1 to 3, wherein said second kinematic pair (302) of said first connecting rod (101), which connects said first connecting rod (101) to said respective portion (111, 112) of said interconnecting element (110) configures at least a second rotation axis (3022) which is coincident with said lateral axis (X) of said interconnecting element (110) and at least a third rotation axis (3023) which is orthogonal to said second rotation axis (3022).

5. The three- or four-wheel tilting motor vehicle (4) according to claim 4, wherein said second kinematic pair (302) of said first connecting rod (101) is defined by a pivot (305) about which said respective portion (111, 112) of said interconnecting element (110) is rotatable, said pivot (305) configures said second rotation axis (3022), said pivot (305) comprising a bushing-shaped end (305B) which is hinged, through a pin (306), to a corresponding fork-shaped end (301C) of a rod-shaped body (300) of said first connecting rod (101).

6. The three- or four-wheel tilting motor vehicle (4) according to claim 4, wherein said second kinematic pair (302) of said first connecting rod (101) comprises a universal joint configured so that the axes of the piston pins coincide with said first rotation axis (3010) and with said third rotation axis (3023).

7. The three- or four-wheel tilting motor vehicle (4) according to any one of claims 2 to 6, wherein said first kinematic pair (401) of said second connecting rod (201) configures a first rotation axis (4010) which is orthogonal to said first rotation axis (3010) configured by said first kinematic pair (301) of said first connecting rod (101).

8. The three- or four-wheel tilting motor vehicle (4) according to claim 7, wherein said first kinematic pair (401) of said second connecting rod (201) is defined by a hinged joint (401A-301D) comprising a cylindrical body (401A) which is integral with a second end (301D) of a respective first connecting rod (101) so as to follow the latter in the tilting movements, said hinged joint comprising a first cylindrical end (401B) of said second connecting rod (201) placed within said cylindrical body (401A) which is integral with said first connecting rod (101).

9. The three- or four-wheel tilting motor vehicle (4) according to any one of claims 2 to 8, wherein said second kinematic pair (402) of the second connecting rod (201), which connects said second connecting rod (201) to said respective portion (111, 112) of said interconnecting element (110) configures a second rotation axis (4022) and a third rotation axis (4023), wherein said second rotation axis (4022) is parallel to said second rotation axis (3022) configured by said second kinematic pair (302) of said first connecting rod (101), said second rotation axis (4022) referring to said second connecting rod (201) being parallel to said second rotation axis (3022) referring to said first connecting rod (101).

10. The three- or four-wheel tilting motor vehicle (4) according to claim 9, wherein said second kinematic pair (201) comprises a pivot (405) which is pivotally inserted into a longitudinal seat defined on a respective one of said portions (111, 112) of said interconnecting element (110), wherein said pivot (405) defines said second rotation axis (4022) referring to said second kinematic pair, said pivot (405) comprising a bushing-shaped end (405B) hinged, through a pin (406), to a corresponding fork-shaped end (401C) of a rod-shaped body (400) of said second connecting rod (201).

11. The three- or four-wheel tilting motor vehicle (4) according to claim 9, wherein said second kinematic pair (402) of said second connecting rod (201) comprises a mechanical joint interposed between a fork-shaped end of a rod-shaped body (400) of said second connecting rod (201) and a bracket (111A, 112A) which is integral with a respective portion (111, 112) of the interconnecting element (110), said bracket (111A, 112A) extending in an eccentric position with respect to the lateral axis (X) so that said mechanical joint is placed in an eccentric position with respect to the same lateral axis (X), said mechanical joint configuring said second rotation axis (4022) and said third rotation axis (4023) referring to said second kinematic pair (402) of the second connecting rod (201), which are orthogonal to each other.

12. The three- or four-wheel tilting motor vehicle (4) according to any one of claims 4 to 11, wherein the length of said second connecting rod (201) is greater than the length of said respective first connecting rod (101), where said length of said first connecting rod (101) is the minimum distance (L1) between the intersecting point of the three axes (3010, 3022, 3023), configured by the kinematic pairs (301, 302) of said first connecting rod (101), and said first rotation axis (4010) defined by said first kinematic pair (401) of said second connecting rod (201), and wherein the length of said second connecting rod (201) is the distance (L2) between the intersecting point of said second rotation axis (4022) and said third rotation axis (4023), configured by said second kinematic pair (402) of said second connecting rod (201), and said first rotation axis (4010) defined by said first kinematic pair (401) of said second connecting rod (201).

13. The three- or four-wheel tilting motor vehicle (4) according to any one of claims 1 to 12, wherein said blocking device is configured so as to generate a braking torque which blocks the rotation of said portions (111, 112) of said interconnecting element (110) so that they become a single body.

14. The three- or four-wheel tilting motor vehicle (4) according to any one of claims 1 to 13, wherein said interconnecting element (110) comprises a middle body (115) interposed between said portions (111, 112) which is rotationally integral, through connection means, with one of said portions (111, 112) connected to a respective tilting part (81, 82) through a respective first connecting rod (101) and a respective second connecting rod (201), wherein said middle body (115) is connected to the other of said portions (111, 112) through second connection means configured to allow the relative rotation of said middle body (115) with respect to said other of said portion (111, 112) and simultaneously to make said middle body (115) integral with said other of said portions (111, 112) in the relative translation movement with respect to said one of said portions (111, 112).

15. The three- or four-wheel tilting motor vehicle (4) according to claim 14, wherein said blocking device comprises a shoe brake (500) which is activated by means of an actuator (550) which is externally supported by said middle body (115), said shoe brake (500) being accommodated in a cylindrical cavity (1 12B) of said other of said portions (112) on the walls on which the shoes of the brake itself act upon the actuation of the actuator (500), said brake (500) being integral with said middle body (115) during the rotation about said lateral axis (X).

## Patentansprüche

1. Drei- oder vierrädriges kippbares Kraftfahrzeug, umfassend:
- mindestens ein Paar von Rädern (10), die von einem Vorder- oder Hinterachsrahmenabschnitt (16) getragen werden und kinematisch miteinander und mit dem Rahmenabschnitt (16) mittels eines Kippgestänges (20) verbunden sind, das es den Rädern (10) ermöglicht, zu kippen und gegebenenfalls zu lenken;
- ein Kippverriegelungssystem (3), umfassend:
- ein Verbindungselement (110), das eine Querachse (X) identifiziert und das mindestens einen ersten Abschnitt (111) und einen zweiten Abschnitt (112) umfasst, die einander gegenüberliegen;
- Gelenkmittel, welche die Abschnitte (111, 112) des Verbindungselements (110) mit zwei Kippteilen (81, 82) einer Vorder- oder Hinterachse verbinden, die beide Kippbewegungen der Räder (10) ausgesetzt sind;
- Verbindungsmittel, welche die Abschnitte (111, 112) des Verbindungselements (110) so verbinden, dass sich jeder Abschnitt (111, 112) in Bezug auf den anderen frei um die Querachse (X) drehen kann, und so, dass sich jeder Abschnitt (111, 112) in Bezug auf den anderen frei entlang der Querachse (X) verschieben kann,
- Antriebsmittel, die dazu geeignet sind, eine Kippbewegung der Räder (10) in eine Drehbewegung der Abschnitte (111, 112) des Verbindungselements (110) umzuwandeln, so dass sie sich bei Vorhandensein von Kippbewegungen der Räder (10) in entgegengesetzten Richtungen um die Querachse (X) drehen;
- eine Blockiervorrichtung, die dazu geeignet ist, den Drehwinkel des Verbindungselements (110) in Bezug auf eine Kippebene zu blockieren, wobei die Blockiervorrichtung eine erste aktive Konfiguration, bei der die Abschnitte (111, 112) des Elements (110) während der Drehung um die Querachse (X) fest verbunden werden und somit Kippbewegungen der Räder (10) verhindern, und eine zweite passive Konfiguration annimmt, bei der die Abschnitte (111, 112) des Verbindungselements (110) sich frei um die Querausdehnungsachse (X) drehen können,
wobei für jeden der Abschnitte (111, 112) des Verbindungselements (110) die Gelenkmittel eine erste Verbindungsstange (101) umfassen, die mit dem jeweiligen der Kippteile (81, 82) mittels eines ersten kinematischen Paares (301) der ersten Verbindungsstange (101) und mit einem jeweiligen der Abschnitte (111, 112) des Verbindungselements (110) mittels eines zweiten kinematischen Paares (302) der ersten Verbindungsstange (101) verbunden ist, und wobei für jeden der Abschnitte (111, 112) des Verbindungselements (110) die Antriebsmittel eine zweite Verbindungsstange (201) umfassen, die mit einer entsprechenden ersten Verbindungsstange (101) mittels eines ersten kinematischen Paares (401) der zweiten Verbindungsstange (201) so verbunden ist, dass sie während der Kippbewegung mit der ersten Verbindungsstange (101) fest verbunden ist, wobei die zweite Verbindungsstange (201) mit einem jeweiligen Abschnitt (111, 112) des Verbindungselements (110) mittels eines zweiten kinematischen Paares (402) der zweiten Verbindungsstange (201) so verbunden ist, dass eine Drehung des entsprechenden Abschnitts (111, 112) des Verbindungselements (110) um die Querachse (X) bei einer Kippbewegung der ersten Verbindungsstange (101) bewirkt wird.

2. Drei- oder vierrädriges kippbares Kraftfahrzeug (4) nach Anspruch 1, wobei das erste kinematische Paar (301) der ersten Verbindungsstange (101), das die erste Verbindungsstange (101) mit dem jeweiligen Kippteil (81, 82) verbindet, eine erste Drehachse (3010) ausbildet, die auf die Kippebene einfällt, und zwar so, dass die erste Drehachse (3010) bei Abwesenheit eines Kippens parallel zu einer Mittelebene (M-M) des Kraftfahrzeugs (4) verläuft.

3. Drei- oder vierrädriges kippbares Kraftfahrzeug (4) nach Anspruch 2, wobei das erste kinematische Paar (301) der ersten Verbindungsstange (101) durch ein Gelenk definiert ist, das einen zylindrischen Körper (301A) umfasst, der fest mit dem jeweiligen Kippteil (81, 82) verbunden ist, in den ein zylindrischer Abschnitt (301B) eines stangenförmigen Körpers (300) der ersten Verbindungsstange (101) eingesetzt ist.

4. Drei- oder vierrädriges kippbares Kraftfahrzeug (4) nach einem der Ansprüche 1 bis 3, wobei das zweite kinematische Paar (302) der ersten Verbindungsstange (101), das die erste Verbindungsstange (101) mit dem jeweiligen Abschnitt (111, 112) des Verbindungselements (110) verbindet, mindestens eine zweite Drehachse (3022), die mit der Querachse (X) des Verbindungselements (110) zusammenfällt, und mindestens eine dritte Drehachse (3023), die orthogonal zu der zweiten Drehachse (3022) ist, ausbildet.

5. Drei- oder vierrädriges kippbares Kraftfahrzeug (4) nach Anspruch 4, wobei das zweite kinematische Paar (302) der ersten Verbindungsstange (101) durch einen Drehzapfen (305) definiert ist, um den der jeweilige Abschnitt (111, 112) des Verbindungselements (110) drehbar ist, der Drehzapfen (305) die zweite Drehachse (3022) ausbildet, wobei der Drehzapfen (305) ein buchsenförmiges Ende (305B) umfasst, das über einen Stift (306) an einem entsprechenden gabelförmigen Ende (301C) eines stangenförmigen Körpers (300) der ersten Verbindungsstange (101) angelenkt ist.

6. Drei- oder vierrädriges kippbares Kraftfahrzeug (4) nach Anspruch 4, wobei das zweite kinematische Paar (302) der ersten Verbindungsstange (101) ein Kreuzgelenk umfasst, das so ausgebildet ist, dass die Achsen der Kolbenbolzen mit der ersten Drehachse (3010) und mit der dritten Drehachse (3023) zusammenfallen.

7. Drei- oder vierrädriges kippbares Kraftfahrzeug (4) nach einem der Ansprüche 2 bis 6, wobei das erste kinematische Paar (401) der zweiten Verbindungsstange (201) eine erste Drehachse (4010) ausbildet, die orthogonal zu der ersten Drehachse (3010) ist, die von dem ersten kinematischen Paar (301) der ersten Verbindungsstange (101) ausgebildet wird.

8. Drei- oder vierrädriges kippbares Kraftfahrzeug (4) nach Anspruch 7, wobei das erste kinematische Paar (401) der zweiten Verbindungsstange (201) durch ein Drehgelenk (401A-301D) definiert ist, das einen zylindrischen Körper (401A) umfasst, der mit einem zweiten Ende (301D) einer jeweiligen ersten Verbindungsstange (101) fest verbunden ist, um dieser bei den Kippbewegungen zu folgen, wobei das Drehgelenk ein erstes zylindrisches Ende (401B) der zweiten Verbindungsstange (201) umfasst, das in dem zylindrischen Körper (401A) angeordnet ist, der mit der ersten Verbindungsstange (101) fest verbunden ist.

9. Drei- oder vierrädriges kippbares Kraftfahrzeug (4) nach einem der Ansprüche 2 bis 8, wobei das zweite kinematische Paar (402) der zweiten Verbindungsstange (201), das die zweite Verbindungsstange (201) mit dem jeweiligen Abschnitt (111, 112) des Verbindungselements (110) verbindet, eine zweite Drehachse (4022) und eine dritte Drehachse (4023) ausbildet, wobei die zweite Drehachse (4022) parallel zu der zweiten Drehachse (3022) ist, die durch das zweite kinematische Paar (302) der ersten Verbindungsstange (101) ausgebildet ist, wobei die zweite Drehachse (4022), die sich auf die zweite Verbindungsstange (201) bezieht, parallel zu der zweiten Drehachse (3022) ist, die sich auf die erste Verbindungsstange (101) bezieht.

10. Drei- oder vierrädriges kippbares Kraftfahrzeug (4) nach Anspruch 9, wobei das zweite kinematische Paar (201) einen Drehzapfen (405) umfasst, der schwenkbar in einen Längssitz eingesetzt ist, der an einem jeweiligen der Abschnitte (111, 112) des Verbindungselements (110) definiert ist, wobei der Drehzapfen (405) die zweite Drehachse (4022), die sich auf das zweite kinematische Paar bezieht, definiert, wobei der Drehzapfen (405) ein buchsenförmiges Ende (405B) umfasst, das über einen Stift (406) an einem entsprechenden gabelförmigen Ende (401C) eines stangenförmigen Körpers (400) der zweiten Verbindungsstange (201) angelenkt ist.

11. Drei- oder vierrädriges kippbares Kraftfahrzeug (4) nach Anspruch 9, wobei das zweite kinematische Paar (402) der zweiten Verbindungsstange (201) ein mechanisches Gelenk umfasst, das zwischen einem gabelförmigen Ende eines stangenförmigen Körpers (400) der zweiten Verbindungsstange (201) und einer Halterung (111A, 112A) angeordnet ist, die mit einem jeweiligen Abschnitt (111, 112) des Verbindungselements (110) fest verbunden ist, wobei die Halterung (111A, 112A) sich in einer exzentrischen Position in Bezug auf die Querachse (X) erstreckt, so dass das mechanische Gelenk in einer exzentrischen Position in Bezug auf dieselbe Querachse (X) platziert ist, wobei das mechanische Gelenk die zweite Drehachse (4022) und die dritte Drehachse (4023), die sich auf das zweite kinematische Paar (402) der zweiten Verbindungsstange (201) beziehen, ausbildet, die zueinander orthogonal sind.

12. Drei- oder vierrädriges kippbares Kraftfahrzeug (4) nach einem der Ansprüche 4 bis 11, wobei die Länge der zweiten Verbindungsstange (201) größer ist als die Länge der jeweiligen ersten Verbindungsstange (101), wobei die Länge der ersten Verbindungsstange (101) der Mindestabstand (L1) zwischen dem Schnittpunkt der drei Achsen (3010, 3022, 3023), die durch die kinematischen Paare (301, 302) der ersten Verbindungsstange (101) ausgebildet sind, und der ersten Drehachse (4010) ist, die durch das erste kinematische Paar (401) der zweiten Verbindungsstange (201) definiert ist, und wobei die Länge der zweiten Verbindungsstange (201) der Abstand (L2) zwischen dem Schnittpunkt der zweiten Drehachse (4022) und der dritten Drehachse (4023), die durch das zweite kinematische Paar (402) der zweiten Verbindungsstange (201) ausgebildet sind, und der ersten Drehachse (4010) ist, die durch das erste kinematische Paar (401) der zweiten Verbindungsstange (201) definiert ist.

13. Drei- oder vierrädriges kippbares Kraftfahrzeug (4) nach einem der Ansprüche 1 bis 12, wobei die Blockiervorrichtung dazu ausgebildet ist, ein Bremsmoment zu erzeugen, das die Drehung der Abschnitte (111, 112) des Verbindungselements (110) blockiert, so dass sie zu einem einzigen Körper werden.

14. Drei- oder vierrädriges kippbares Kraftfahrzeug (4) nach einem der Ansprüche 1 bis 13, wobei das Verbindungselement (110) einen zwischen den Abschnitten (111, 112) angeordneten Mittelkörper (115) umfasst, der über Verbindungsmittel drehbar mit einem der Abschnitte (111, 112) verbunden ist, der über eine jeweilige erste Verbindungsstange (101) und eine jeweilige zweite Verbindungsstange (201) mit einem jeweiligen Kippteil (81, 82) verbunden ist, wobei der Mittelkörper (115) mit dem anderen der Abschnitte (111, 112) über zweite Verbindungsmittel verbunden ist, die dazu ausgebildet sind, die relative Drehung des Mittelkörpers (115) in Bezug auf den anderen der Abschnitte (111, 112) zu ermöglichen und gleichzeitig den Mittelkörper (115) bei der relativen Translationsbewegung in Bezug auf den einen der Abschnitte (111, 112) mit dem anderen der Abschnitte (111, 112) fest zu verbinden.

15. Drei- oder vierrädriges kippbares Kraftfahrzeug (4) nach Anspruch 14, wobei die Blockiervorrichtung eine Backenbremse (500) umfasst, die mittels eines Aktuators (550) aktiviert wird, der außen von dem Mittelkörper (115) getragen wird, wobei die Backenbremse (500) in einem zylindrischen Hohlraum (112B) des anderen der Abschnitte (112) an den Wänden untergebracht ist, auf welche die Backen der Bremse selbst bei Betätigung des Aktuators (500) einwirken, wobei die Bremse (500) während der Drehung um die Querachse (X) fest mit dem Mittelkörper (115) verbunden ist.

## Revendications

1. Véhicule à moteur inclinable à trois ou quatre roues, comprenant :
- au moins une paire de roues (10) portées par une portion de cadre d'essieu avant ou arrière (16) et reliées cinématiquement l'une à l'autre et à ladite portion de cadre (16) au moyen d'un couplage inclinable (20) qui permet auxdites roues (10) de s'incliner et éventuellement de diriger ;
- un système de verrouillage d'inclinaison (3) comprenant :
- un élément d'interconnexion (110) qui identifie un axe latéral (X) et qui comprend au moins une première portion (111) et une deuxième portion (112) qui sont opposées l'une à l'autre ;
- des moyens d'articulation qui relient lesdites portions (111, 112) dudit élément d'interconnexion (110) à deux parts inclinables (81, 82) d'un essieu avant ou arrière, qui sont toutes deux soumises à des mouvements d'inclinaison desdites roues (10) ;
- des moyens de liaison qui relient lesdites portions (111, 112) dudit élément d'interconnexion (110) de sorte que chaque portion (111, 112) est libre de tourner par rapport à l'autre autour dudit axe latéral (X) et de sorte que chaque portion (111, 112) est libre de translater par rapport à l'autre le long dudit axe latéral (X),
- des moyens d'entraînement adaptés pour transformer un mouvement d'inclinaison desdites roues (10) en un mouvement de rotation desdites portions (111, 112) dudit élément d'interconnexion (110) de sorte qu'elles tournent dans des directions opposées autour dudit axe latéral (X) en présence de mouvements d'inclinaison desdites roues (10) ;
- un dispositif de blocage adapté pour bloquer l'angle de rotation dudit élément d'interconnexion (110) par rapport à un plan d'inclinaison, dans lequel ledit dispositif de blocage prend une première configuration active pour laquelle lesdites portions (111, 112) dudit élément (110) deviennent solidaires lors de la rotation autour dudit axe latéral (X), empêchant ainsi les mouvements d'inclinaison desdites roues (10), et une deuxième configuration passive pour laquelle lesdites portions (111, 112) dudit élément d'interconnexion (110) sont libres de tourner autour dudit axe d'extension latéral (X),
dans lequel, pour chacune desdites portions (111, 112) dudit élément d'interconnexion (110), lesdits moyens d'articulation comprennent une première bielle (101) reliée à ladite part respective desdites parts inclinables (81, 82) au moyen d'une première paire cinématique (301) de la première bielle (101), et à une portion respective desdites portions (111, 112) dudit élément d'interconnexion (110) au moyen d'une deuxième paire cinématique (302) de ladite première bielle (101),
et dans lequel, pour chacune desdites portions (111, 112) dudit élément d'interconnexion (110), lesdits moyens d'entraînement comprennent une deuxième bielle (201) reliée à une dite première bielle correspondante (101) au moyen d'une première paire cinématique (401) de la deuxième bielle (201) de manière à être solidaire pendant le mouvement d'inclinaison avec ladite première bielle (101), ladite deuxième bielle (201) étant reliée à une portion respective (111, 112) dudit élément d'interconnexion (110) au moyen d'une deuxième paire cinématique (402) de la deuxième bielle (201) de manière à provoquer une rotation de ladite portion correspondante (111, 112) dudit élément d'interconnexion (110) autour dudit axe latéral (X) lors d'un mouvement d'inclinaison de ladite première bielle (101).

2. Véhicule à moteur inclinable à trois ou quatre roues (4) selon la revendication 1, dans lequel ladite première paire cinématique (301) de la première bielle (101) qui relie ladite première bielle (101) à ladite part inclinable respective (81, 82) configure un premier axe de rotation (3010) qui est incident sur ledit plan d'inclinaison et tel que ledit premier axe de rotation (3010) est parallèle à un plan médian (M-M) dudit véhicule à moteur (4) en l'absence d'inclinaison.

3. Véhicule à moteur inclinable à trois ou quatre roues (4) selon la revendication 2, dans lequel ladite première paire cinématique (301) de la première bielle (101) est définie par une charnière comprenant un corps cylindrique (301A) qui est solidaire de ladite part inclinable respective (81, 82) dans laquelle une portion cylindrique (301B) d'un corps en forme de tige (300) de ladite première bielle (101) est insérée.

4. Véhicule à moteur inclinable à trois ou quatre roues (4) selon l'une quelconque des revendications 1 à 3, dans lequel ladite deuxième paire cinématique (302) de ladite première bielle (101), qui relie ladite première bielle (101) à ladite portion respective (111, 112) dudit élément d'interconnexion (110), configure au moins un deuxième axe de rotation (3022) qui coïncide avec ledit axe latéral (X) dudit élément d'interconnexion (110) et au moins un troisième axe de rotation (3023) qui est orthogonal audit deuxième axe de rotation (3022).

5. Véhicule à moteur inclinable à trois ou quatre roues (4) selon la revendication 4, dans lequel ladite deuxième paire cinématique (302) de ladite première bielle (101) est définie par un pivot (305) autour duquel ladite portion respective (111, 112) dudit élément d'interconnexion (110) peut tourner, ledit pivot (305) configure ledit deuxième axe de rotation (3022), ledit pivot (305) comprenant une extrémité en forme de douille (305B) qui est articulée, par l'intermédiaire d'un goupille (306), à une extrémité en forme de fourche correspondante (301C) d'un corps en forme de tige (300) de ladite première bielle (101).

6. Véhicule à moteur inclinable à trois ou quatre roues (4) selon la revendication 4, dans lequel ladite deuxième paire cinématique (302) de ladite première bielle (101) comprend un joint universel configuré de sorte que les axes des goupilles de piston coïncident avec ledit premier axe de rotation (3010) et avec ledit troisième axe de rotation (3023).

7. Véhicule à moteur inclinable à trois ou quatre roues (4) selon l'une quelconque des revendications 2 à 6, dans lequel ladite première paire cinématique (401) de ladite deuxième bielle (201) configure un premier axe de rotation (4010) qui est orthogonal audit premier axe de rotation (3010) configuré par ladite première paire cinématique (301) de ladite première bielle (101).

8. Véhicule à moteur inclinable à trois ou quatre roues (4) selon la revendication 7, dans lequel ladite première paire cinématique (401) de ladite deuxième bielle (201) est définie par un joint articulé (401A-301D) comprenant un corps cylindrique (401A) qui est solidaire d'une deuxième extrémité (301D) d'une première bielle respective (101) de manière à suivre cette dernière dans les mouvements d'inclinaison, ledit joint articulé comprenant une première extrémité cylindrique (401B) de ladite deuxième bielle (201) placée à l'intérieur dudit corps cylindrique (401A) qui est solidaire de ladite première bielle (101).

9. Véhicule à moteur inclinable à trois ou quatre roues (4) selon l'une quelconque des revendications 2 à 8, dans lequel ladite deuxième paire cinématique (402) de la deuxième bielle (201), qui relie ladite deuxième bielle (201) à ladite portion respective (111, 112) dudit élément d'interconnexion (110), configure un deuxième axe de rotation (4022) et un troisième axe de rotation (4023), dans lequel ledit deuxième axe de rotation (4022) est parallèle audit deuxième axe de rotation (3022) configuré par ladite deuxième paire cinématique (302) de ladite première bielle (101), ledit deuxième axe de rotation (4022) se référant à ladite deuxième bielle (201) étant parallèle audit deuxième axe de rotation (3022) se référant à ladite première bielle (101).

10. Véhicule à moteur inclinable à trois ou quatre roues (4) selon la revendication 9, dans lequel ladite deuxième paire cinématique (201) comprend un pivot (405) qui est inséré de manière pivotante dans un siège longitudinal défini sur l'une respective desdites portions (111, 112) dudit élément d'interconnexion (110), dans lequel ledit pivot (405) définit ledit deuxième axe de rotation (4022) en référence à ladite deuxième paire cinématique, ladite pivot (405) comprenant une extrémité en forme de douille (405B) articulée, par l'intermédiaire d'une goupille (406), à une extrémité en forme de fourche correspondante (401C) d'un corps en forme de tige (400) de ladite deuxième bielle (201).

11. Véhicule à moteur inclinable à trois ou quatre roues (4) selon la revendication 9, dans lequel ladite deuxième paire cinématique (402) de ladite deuxième bielle (201) comprend un joint mécanique interposé entre une extrémité en forme de fourche d'un corps en forme de tige (400) de ladite deuxième bielle (201) et un support (111A, 112A) qui est solidaire d'une portion respective (111, 112) de l'élément d'interconnexion (110), ledit support (111A, 112A) s'étendant dans une position excentrique par rapport à l'axe latéral (X) de sorte que ledit joint mécanique est placé dans une position excentrique par rapport au même axe latéral (X), ledit joint mécanique configurant ledit deuxième axe de rotation (4022) et ledit troisième axe de rotation (4023) se référant à ladite deuxième paire cinématique (402) de la deuxième bielle (201), qui sont orthogonaux l'un à l'autre.

12. Véhicule à moteur inclinable à trois ou quatre roues (4) selon l'une quelconque des revendications 4 à 11, dans lequel la longueur de ladite deuxième bielle (201) est supérieure à la longueur de ladite première bielle respective (101), dans lequel ladite longueur de ladite première bielle (101) est la distance minimale (L1) entre le point d'intersection des trois axes (3010, 3022, 3023), configuré par les paires cinématiques (301, 302) de ladite première bielle (101), et ledit premier axe de rotation (4010) défini par ladite première paire cinématique (401) de ladite deuxième bielle (201), et dans lequel la longueur de ladite deuxième bielle (201) est la distance (L2) entre le point d'intersection dudit deuxième axe de rotation (4022) et dudit troisième axe de rotation (4023), configuré par ladite deuxième paire cinématique (402) de ladite deuxième bielle (201), et ledit premier axe de rotation (4010) défini par ladite première paire cinématique (401) de ladite deuxième bielle (201).

13. Véhicule à moteur inclinable à trois ou quatre roues (4) selon l'une quelconque des revendications 1 à 12, dans lequel ledit dispositif de blocage est configuré de manière à générer un couple de freinage qui bloque la rotation desdites portions (111, 112) dudit élément d'interconnexion (110) de sorte qu'elles deviennent un seul corps.

14. Véhicule à moteur inclinable à trois ou quatre roues (4) selon l'une quelconque des revendications 1 à 13, dans lequel ledit élément d'interconnexion (110) comprend un corps intermédiaire (115) interposé entre lesdites portions (111, 112) qui est solidaire en rotation, par l'intermédiaire de moyens de liaison, avec l'une desdites portions (111, 112) reliée à une part inclinable respective (81, 82) par l'intermédiaire d'une première bielle respective (101) et d'une deuxième bielle respective (201), dans lequel ledit corps intermédiaire (115) est relié à l'autre desdites portions (111, 112) par l'intermédiaire de deuxièmes moyens de liaison configurés pour permettre la rotation relative dudit corps intermédiaire (115) par rapport à ladite autre portion (111, 112) et simultanément pour rendre ledit corps intermédiaire (115) solidaire de ladite autre desdites portions (111, 112) dans le mouvement de translation relatif par rapport à ladite une desdites portions (111, 112).

15. Véhicule à moteur inclinable à trois ou quatre roues (4) selon la revendication 14, dans lequel ledit dispositif de blocage comprend un frein à mâchoires (500) qui est activé au moyen d'un actionneur (550) qui est supporté extérieurement par ledit corps intermédiaire (115), ledit frein à mâchoires (500) étant logé dans une cavité cylindrique (112B) de ladite autre desdites portions (112) sur les parois sur lesquelles les mâchoires du frein elles-mêmes agissent lors de l'actionnement de l'actionneur (500), ledit frein (500) étant solidaire dudit corps intermédiaire (115) pendant la rotation autour dudit axe latéral (X).
